# EUROPÄISCHE PATENTSCHRIFT

(11) **EP 1 727 716 B1**
(45) Veröffentlichungstag und Bekanntmachung des Hinweises auf die Patenterteilung: **06.05.2009**
(21) Anmeldenummer: 05708009.5
(22) Anmeldetag: 14.02.2005
(51) Int. Cl.: B60S 1/34

(54) **WISCHERARM FÜR EINE SCHEIBENWISCHVORRICHTUNG**
WIPER ARM FOR A WINDSCREEN WIPING DEVICE
BRAS ESSUIE-GLACE POUR UN DISPOSITIF D'ESSUIE-GLACE

(30) Priorität: 13.03.2004 DE 102004012430
(43) Veröffentlichungstag der Anmeldung: 06.12.2006
(73) Patentinhaber: ROBERT BOSCH GMBH, 70442 Stuttgart (DE)
(72) Erfinder: RAPP, Harald, 77815 Bühl (DE); BAUMERT, Stefan, 76139 Karlsruhe (DE)
(86) Internationale Anmeldenummer: PCT/EP2005/050636
(87) Internationale Veröffentlichungsnummer: WO 2005/087559

(56) Entgegenhaltungen:
- DE-A1- 10 228 349
- FR-A- 2 550 110
- GB-A- 2 311 338
- US-A1- 2003 196 291

## Beschreibung

### Stand der Technik

Die Erfindung betrifft einen Wischerarm für eine Scheibenwischvorrichtung nach Gattung des unabhängigen Anspruchs.

Es sind schon zahlreiche Wischerarme für Scheibenwischvorrichtungen, insbesondere für Kraftfahrzeuge bekannt, die ein Befestigungsteil aus Blech aufweisen, das von im Wesentlichen länglicher Gestalt ist und gelenkig mit einem länglichen Gelenkteil verbunden ist. Das Befestigungsteil weist hierbei entlang seiner Längserstreckung ein erstes und ein zweites Ende auf, wobei das erste Ende mit dem Gelenkteil verbunden ist, das an seinem freien Ende ein Wischblatt zu tragen vermag. Das zweite Ende des Befestigungsteils weist ein Auge als Befestigungsmittel auf, das zur Befestigung des Wischerarms an einer Wischerwelle der Scheibenwischvorrichtung dient.

Die DE-A-101 31 580 zeigt einen Wischerarm nach dem Oberbegriff des unabhängigen Anspruchs. Insbesondere bei großen Wischerarmen werden jedoch sehr hohe Anforderungen an das Lager zwischen Gelenkteil und Befestigungsteil gestellt, da hier eine große Biege- und Torsionssteifigkeit erforderlich ist und das Lager trotzdem leicht und kostengünstig sein soll.

Aus FR 2 550 110 A ist ein Wischerarm für eine Scheibenwischvorrichtung bekannt, der ein Befestigungsteil aufweist, das aus Blech ausgebildet ist. Das Befestigungsteil weist zwei Enden auf, wobei das erste Ende gelenkig mit einem länglichen Gelenkteil verbunden ist. Das Gelenkteil vermag an einem freien Ende ein Wischblatt zu tragen. Das zweite Ende des Befestigungsteils weist ein Befestigungsmittel zur Befestigung des Wischerarms an einer Wischerwelle der Scheibenwischvorrichtung auf. Das Befestigungsteil weist an seinem ersten Ende ein Loch mit einem Bund auf, der einstückig mit dem Befestigungsteil ausgebildet ist.

Aus GB 2 311 338 A dem oberbegriff entsprechend ist ebenfalls ein Befestigungsteil für eine Scheibenwischvorrichtung eines Kraftfahrzeuges bekannt, das an einem Ende ein Loch mit einem Bund aufweist, der einstückig mit dem Befestigungsteil ausgebildet ist.

Darüber hinaus ist es zum Schutz des Befestigungsteils - insbesondere im Bereich seines zweiten Endes - bekannt, in diesem Bereich eine Abdeckkappe vorzusehen. Diese ist jedoch bei einem derartigen Befestigungsteil nur durch einen relativ hohen Aufwand realisierbar, wodurch der Wischerarm kostenintensiv und unpraktikabel in der Fertigung wird. Werden weitere Öffnungen zur Befestigung einer Abdeckkappe in das Befestigungsteil eingebracht, so leidet die Stabilität, insbesondere die Torsionssteifigkeit des Befestigungsteils. Eine solche Abdeckkappe verbessert die Strömungseigenschaften jedoch eminent und verleiht dem Wischerarm darüber hinaus eine gefälligere Optik.

### Vorteile der Erfindung

Der erfindungsgemäße Wischerarm mit den Merkmalen des Hauptanspruchs hat demgegenüber den Vorteil, dass das Befestigungsteil an seinem ersten Ende ein Loch mit einem Bund aufweist, der einstückig mit dem Befestigungsteil ausgebildet ist. Dies erhöht die Stabilität des Befestigungsteils, ohne daß weitere Teile benötigt werden. Dadurch bleibt der Wischerarm leicht, ist kostengünstig in der Fertigung und einfach in der Montage.

Ein erfindungsgemäßer besonders guter Schutz des Befestigungsteils wird durch eine Abdeckkappe erzielt, die den Bund umgreift. Dadurch wird weiters die Stabilität und Torsionssteifigkeit des Befestigungsteils durch die Abdeckkappe nicht beeinträchtigt.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn das Befestigungsteil, zumindest im Bereich seines ersten Endes, im Querschnitt von im Wesentlichen u-förmiger Gestalt ist und zwei Schenkel aufweist, und das Loch koaxial beide Schenkel durchgreift. Auf diese Weise ist in der Fertigung die gelenkige Verbindung zwischen Gelenkteil und Befestigungsteil besonders einfach darzustellen.

Hierbei ist es als vorteilhaft anzusehen, wenn das Loch eine Gelenkachse zwischen Befestigungsteil und Gelenkteil bildet.

Eine besonders große Stabilität wird dadurch erzielt, dass der Bund an beiden Schenkeln vorgesehen ist und kragenartig nach außen gerichtet ist.

Eine besonders stabile und kostengünstige Verbindung wird Vorteilhafterweise dadurch erzielt, dass im Loch eine Gelenkwelle zur gelenkigen Verbindung von Befestigungsteil und Gelenkteil vorgesehen ist.
Besonders vorteilhaft ist es, wenn die Abdeckkappe am Bund drehbar gelagert ist. Damit wird eine sehr einfache und schnelle Montage des Wischerarms auf die Scheibenwischvorrichtung erzielt.

Ein besonders stabiles Gelenk wird durch eine Bundbuchse erzielt, die das Loch durchgreift und den Bund an seiner äußeren Stirnseite abschließt. Vorteilhafterweise kann der Wischerarm besonders kostengünstig ausgebildet werden, wenn das Befestigungsteil als Stanzbiegeteil ausgebildet ist und der Bund durch einen Tiefziehprozess hergestellt ist.

### Zeichnungen

Verschiedene Ausführungsbeispiele der Erfindung sind in den Zeichnungen dargestellt und in der nachfolgenden Beschreibung näher erläutert. Es zeigen:
Figur 1, einen erfindungsgemäßen Wischerarm in einer perspektivischen Darstellung, Figur 2, einen Querschnitt durch einen erfindungsgemäßen Wischerarm im Bereich des ersten Endes des Gelenkteils,
Figur 3, der in Figur 2 gezeigte Querschnitt in einer Variation,
Figur 4, der Querschnitt auf Figuren 2 und 3 in einer weiteren Variation und
Figur 5, das erste Ende eines Befestigungsteils eines erfindungsgemäßen Wischerarms in einer perspektivischen Darstellung.

### Beschreibung der Ausführungsbeispiele

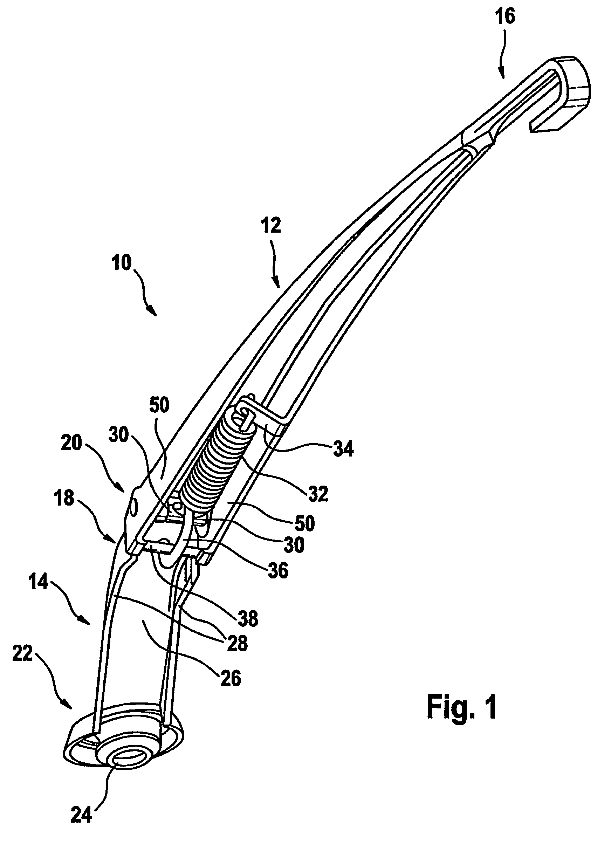

In Figur 1 ist ein erfindungsgemäßer Wischerarm 10 in einer perspektivischen Darstellung gezeigt. Dieser umfasst im Wesentlichen ein Gelenkteil 12 und ein Befestigungsteil 14, die beide aus Blech als Stanz-Biege-Teile ausgebildet sind. Das Gelenkteil 12 ist von im Wesentlichen länglicher Gestalt und an einem Ende seiner Längserstreckung mit dem Befestigungsteil 14 gelenkig verbunden. Am anderen, freien Ende 16 seiner Längserstreckung, weist es eine hakenförmige Biegung auf, an der ein Wischblatt gelenkig befestigt werden kann.

Das Befestigungsteil 14 ist ebenfalls von im Wesentlichen länglicher Gestalt und weist entlang seiner Längserstreckung ein erstes Ende 18 auf, an dem es durch ein Gelenk 20 mit dem Gelenkteil 12 verbunden ist. Am anderen, zweiten Ende 22 des Befestigungsteils 14 ist ein Auge 24 vorgesehen, das zur Befestigung des Wischerarms 10 an einer Wischerwelle einer Scheibenwischvorrichtung dient. Die Wischerwelle, die hier der Übersichtlichkeit halber nicht gezeichnet ist, vollführt im Betrieb eine rotatorische Hin-und Herbewegung, so dass der Wischerarm 10 in eine pendelnde Bewegung versetzt wird.

Das Befestigungsteil 14 ist im Bereich des Gelenks 20 im Querschnitt von im Wesentlichen u-förmiger Gestalt, mit einer Basis 26 und zwei Schenkeln 28. Das Gelenkteil 12 ist im Bereich des Gelenks 20 ebenso von im Wesentlichen u-förmiger Gestalt und umschmiegt das Befestigungsteil 14 im Bereich seines ersten Endes 18 mit Lateralflanken 50. Das Gelenk 20 wird hier im Wesentlichen durch einen Gelenkbolzen 30 gebildet, der das Gelenkteil 12 und das Befestigungsteil 14 in voller Länge durchgreift. Damit das freie Ende 16 des Gelenkteils 12 im Betrieb auf die Scheibe gedrückt wird, ist zwischen dem Befestigungsteil 14 und dem Gelenkteil 12 eine Feder 32 gespannt, die an einem Ende in eine aus dem Gelenkteil 12 herausgebogene Lasche 34 eingehakt ist und am anderen Ende in eine c-förmigen Bügel 36 eingehakt ist, der wiederum in eine Querstrebe 38, die das Befestigungsteil 12 zwischen den Schenkeln 28 durchgreift, eingehakt ist.

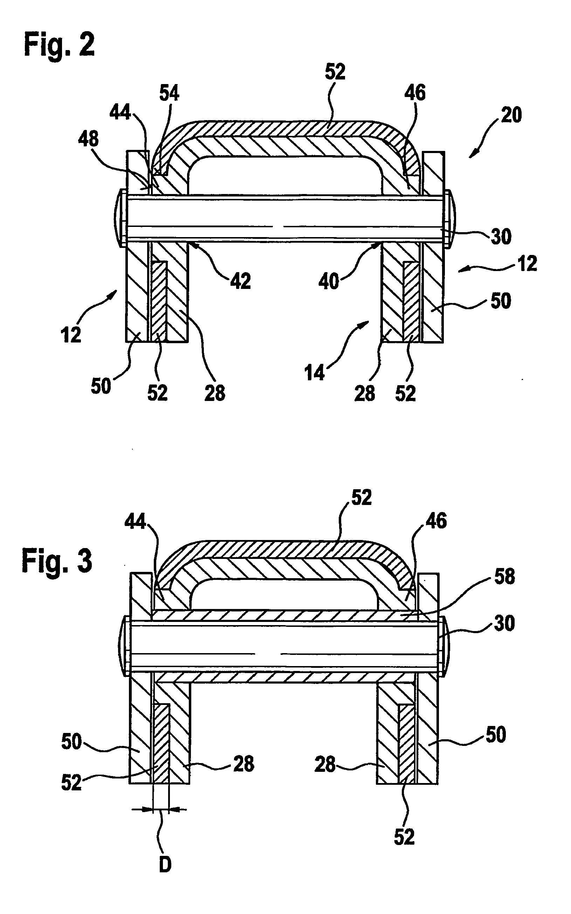

In Figur 2 ist ein Querschnitt durch das Gelenk 20 zwischen Gelenkteil 12 und Befestigungsteil 14 gezeichnet. Die Querstrebe 38 sowie der Bügel 36 (Figur 1) sind aus Gründen der Übersichtlichkeit weggelassen. Das Befestigungsteil 14 ist von im Querschnitt u-förmiger Gestalt und weist in seinen Schenkeln 28 koaxial ein erstes Loch 40 sowie ein zweites Loch 42 auf, die vom Gelenkbolzen 30 durchgriffen werden. Auf der Außenseite des u-förmigen Befestigungsteils 14 sind die Löcher von jeweils einem Bund 44, 46 umschlossen, der wie die Löcher 40, 42 kreisringförmig ausgebildet ist und sich kragenartig nach außen erstreckt. Der Bund 44 weist eine Stirnseite 48 auf, die ihn nach außen hin begrenzt. Der Gelenkbolzen 30 wird in den Löchern 40, 42 und durch die Bünde 44, 46 gelagert. Die Lateralflanken 50 des Gelenkteils 12 umschmiegen die Schenkel 28 des Befestigungsteils an der Stirnseite 48 der Bünde 44, 46. Der Gelenkbolzen 30 ist hierbei an der Außenseite der Lateralflanken 50 des Gelenkteils 12 vernietet.

Das Befestigungsteil 14 wird im Bereich seines ersten Endes 18 von einer Abdeckkappe 52 ummantelt, die eine Bohrung 54 aufweist, deren Durchmesser genau so groß ist wie der Außendurchmesser des Bundes 44. Mutatis mutantis gilt dies auch für den Bund 46. Auf diese Weise lässt sich die Abdeckkappe 52 um die Bünde 44, 46 drehen, was die Montage des Wischerarms 10 an die Scheibenwischvorrichtung erleichtert.

In Figur 3 ist der gleiche Querschnitt wie in Figur 2 in einer Variation gezeigt. Die zu Figur 2 identischen Teile wurden mit gleichen Bezugsziffern versehen. Hierbei ist zwischen den Löchern 40, 42 der Schenkel 28 des Gelenkteils 14 eine Lagerbuchse von hohlzylindrischer Gestalt eingeschoben, deren Außendurchmesser dem Durchmesser der Löcher 40, 42 entspricht und deren Innendurchmesser dem Durchmesser des Gelenkbolzen 30 entspricht. Die Bünde 44, 46 entsprechen in ihrer Höhe in etwa der Dicke D der Abdeckkappe 52, so dass die Lateralflanken 50 des Gelenkteils 12 auf den Flächen der Abdeckkappe 52 zu gleiten vermögen.

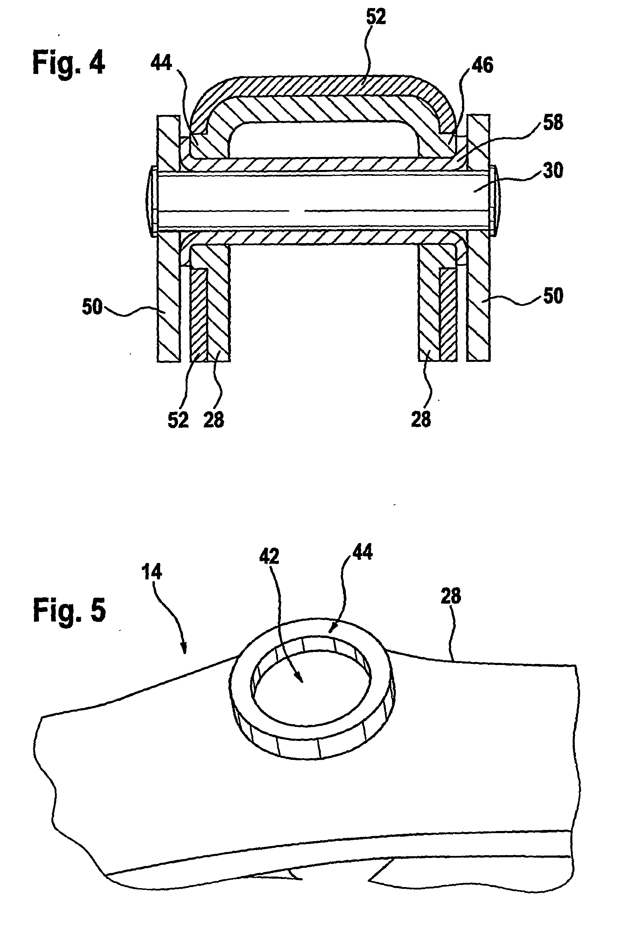

In Figur 4 ist eine weitere Variation eines erfindungsgemäßen Wischerarms gezeigt. Auch dieser ist im Wesentlichen identisch mit den in den vorangegangenen Ausführungsbeispielen. Hier ist jedoch in die Löcher 40, 42 eine Bundbuchse 58 eingesetzt, die als rotationssymmetrisches Teil ausgebildet ist, deren Rotationsflächenquerschnitt der eines U entspricht. Die Basis des u-förmigen Flächenquerschnitt dient hierbei als Lagerbüchse für den Gelenkbolzen 30. Die beiden Schenkel liegen auf der Stirnseite 48 der Bünde 44, 46 auf, so dass die Bundbuchse 58 axial fixiert zwischen den beiden Stirnseiten der Bünde 44, 46 angeordnet ist. Der Gelenkbolzen 30 ist hier ebenfalls auf der Außenseite der Lateralschenkel 50 des Gelenkteils 12 vernietet. In einer Variation der Erfindung kann der Gelenkbolzen natürlich - bei allen gezeigten Ausführungsbeispielen - auch verschweißt, verklebt oder verstemmt sein.

In Figur 5 ist das erste Ende 18 des Befestigungsteils 14 in einer perspektivischen Ansicht gezeigt. Der Schenkel 28 weist das kreisrunde Loch 42 auf, welches vom Bund 44 umschlossen ist. Die äußere Stirnseite 48 des Bundes 44 ist eben ausgeführt, so dass die Stirnseite 48 im Wesentlichen parallel zum Schenkel 28 angeordnet ist. Das Befestigungsteil 14 ist als Stanz-Biege-Teil ausgebildet, wobei der Bund 44 durch einen Tiefziehprozess hergestellt wurde.

## Patentansprüche

1. Wischerarm (10) für eine Scheibenwischvorrichtung, insbesondere für ein Kraftfahrzeug, mindestens umfassend ein Befestigungsteil (14), das aus Blech ausgebildet ist und dessen Längserstreckung ein erstes und ein zweites Ende (22) aufweist, wobei das erste Ende (18) gelenkig mit einem länglichen Gelenkteil (12) verbunden ist, das an einem freien Ende (16) ein Wischblatt zu tragen vermag, und das zweite Ende (22) ein Befestigungsmittel zur Befestigung des Wischerarms (10) an einer Wischerwelle der Scheibenwischvorrichtung aufweist, wobei das Befestigungsteil (14) an seinem ersten Ende (18) ein Loch (40) mit einem Bund (44) aufweist, der einstückig mit dem Befestigungsteil (14) ausgebildet ist, **dadurch gekennzeichnet, dass** eine Abdeckkappe (52) vorgesehen ist, die den Bund (44) umgreift.

2. Wischerarm (10), nach Anspruch 1, **dadurch gekennzeichnet, dass** das Befestigungsteil (14), zumindest im Bereich seines ersten Endes (18), im Querschnitt von im wesentlichen U-förmiger Gestalt ist und zwei Schenkel (28) aufweist, und das Loch koaxial beide Schenkel (28) durchgreift.

3. Wischerarm (10), nach einem der vorhergehenden Ansprüche, **dadurch gekennzeichnet, dass** das Loch (40) eine Gelenkachse zwischen Befestigungsteil (14) und Gelenkteil (12) bildet.

4. Wischerarm (10), nach einem der Ansprüche 2 und 3, **dadurch gekennzeichnet, dass** der Bund (44) an beiden Schenkeln (28) vorgesehen und kragenartig nach außen gerichtet ist.

5. Wischerarm (10), nach einem der vorhergehenden Ansprüche, **dadurch gekennzeichnet, dass** im Loch (40) eine Gelenkwelle zur gelenkigen Verbindung von Befestigungsteil (14) und Gelenkteil (12) vorgesehen ist.

6. Wischerarm (10), nach einem der vorhergehenden Ansprüche, **dadurch gekennzeichnet, dass** die Abdeckkappe (52) am Bund (44) drehbar gelagert ist.

7. Wischerarm (10), nach einem der vorhergehenden Ansprüche, **dadurch gekennzeichnet, dass** eine Bundbuchse (58) vorgesehen ist, die das Loch (40) durchgreift und den Bund (44) an seiner äußeren Stirnseite (48) abschließt.

8. Wischerarm (10), nach einem der vorhergehenden Ansprüche, **dadurch gekennzeichnet, dass** das Befestigungsteil (14) als Biege-Stanz-Teil ausgebildet ist und der Bund (44) durch einen Tiefziehprozess hergestellt ist.

## Claims

1. Wiper arm (10) for a windscreen wiper device, in particular for a motor vehicle, at least comprising a fastening part (14) which is formed from sheet metal and whose longitudinal extent has a first and a second end (22), with the first end (18) being articulatedly connected to an elongate joint part (12) which, at a free end (16), can support a wiper blade, and the second end (22) having a fastening means for fastening the wiper arm (10) to a wiper shaft of the windscreen wiper device, with the fastening part (14) having, at its first end (18), a hole (40) with a collar (44) which is formed in one piece with the fastening part (14), **characterized in that** a covering cap (52) is provided which engages around the collar (44).

2. Wiper arm (10) according to Claim 1, **characterized in that** the fastening part (14), at least in the region of its first end (18), is of substantially U-shaped design in cross section and has two limbs (28) and the hole extends coaxially through both limbs (28).

3. Wiper arm (10) according to one of the preceding claims, **characterized in that** the hole (40) forms a joint axis between the fastening part (14) and the joint part (12).

4. Wiper arm (10) according to one of Claims 2 and 3, **characterized in that** the collar (44) is provided on both limbs (28) and is directed outward in the manner of a flange.

5. Wiper arm (10) according to one of the preceding claims, **characterized in that** a joint shaft for articulatedly connecting the fastening part (14) and joint part (12) is provided in the hole (40).

6. Wiper arm (10) according to one of the preceding claims, **characterized in that** the covering cap (52) is rotatably mounted on the collar (44).

7. Wiper arm (10) according to one of the preceding claims, **characterized in that** a collar sleeve (58) is provided which extends through the hole (40) and which closes off the collar (44) at its outer end side (48).

8. Wiper arm (10) according to one of the preceding claims, **characterized in that** the fastening part (14) is formed as a bent punched part and the collar (44) is produced by means of a deep-drawing process.

## Revendications

1. Bras d'essuie-glace (10) pour un dispositif d'essuie-glace, en particulier pour un véhicule automobile, comprenant au moins une partie de fixation (14) qui est réalisée en tôle et dont l'étendue longitudinale présente une première et une deuxième extrémité (22), la première extrémité (18) étant connectée de manière articulée à une partie d'articulation allongée (12) qui peut porter à une extrémité (16) un balai d'essuie-glace, et la deuxième extrémité (22) présentant un moyen de fixation pour la fixation du bras d'essuie-glace (10) à un arbre d'essuie-glace du dispositif d'essuie-glace, la partie de fixation (14) présentant à sa première extrémité (18) un trou (40) avec un épaulement (44), qui est réalisé d'une seule pièce avec la partie de fixation (14), **caractérisé en ce que** l'on prévoit un capuchon de recouvrement (52) qui vient en prise autour de l'épaulement (44).

2. Bras d'essuie-glace (10) selon la revendication 1, **caractérisé en ce que** la partie de fixation (14), au moins dans la région de sa première extrémité (18), a une forme en section transversale essentiellement en forme de U et présente deux branches (28) et le trou traverse coaxialement les deux branches (28).

3. Bras d'essuie-glace (10) selon l'une quelconque des revendications précédentes, **caractérisé en ce que** le trou (40) forme un axe d'articulation entre la partie de fixation (14) et la partie d'articulation (12).

4. Bras d'essuie-glace (10) selon l'une quelconque des revendications 2 et 3, **caractérisé en ce que** l'épaulement (44) est prévu sur les deux branches (28) et est orienté vers l'extérieur en forme de rebord.

5. Bras d'essuie-glace (10) selon l'une quelconque des revendications précédentes, **caractérisé en ce qu'**un arbre d'articulation pour la connexion articulée de la partie de fixation (14) et de la partie d'articulation (12) est prévu dans le trou (40).

6. Bras d'essuie-glace (10) selon l'une quelconque des revendications précédentes, **caractérisé en ce que** le capuchon de recouvrement (52) est monté à rotation sur l'épaulement (44).

7. Bras d'essuie-glace (10) selon l'une quelconque des revendications précédentes, **caractérisé en ce qu'**il est prévu un manchon d'épaulement (58) qui traverse le trou (40) et qui termine l'épaulement (44) au niveau de son côté frontal extérieur (48).

8. Bras d'essuie-glace (10) selon l'une quelconque des revendications précédentes, **caractérisé en ce que** la partie de fixation (14) est réalisée sous forme de pièce estampée-cintrée et l'épaulement (44) est fabriqué par un procédé d'emboutissage profond.
